# EUROPEAN PATENT SPECIFICATION

(11) **EP 0 941 266 B1**
(45) Date of publication and mention of the grant of the patent: **22.09.2004**
(21) Application number: 97953725.5
(22) Date of filing: 26.11.1997
(51) Int. Cl.: C08G 63/00

(54) **PROCESS FOR PREPARATION OF MODIFIED 1,3-PROPANEDIOL-BASED POLYESTERS**
VERFAHREN ZUR HERSTELLUNG VON MODIFIZIERTEN POLYESTERN AUF BASIS VON 1,3-PROPANDIOL
PROCEDE DE PREPARATION DES POLYESTERS MODIFIES A BASE DE 1,3-PROPANEDIOL

(30) Priority: 27.11.1996 US 756595; 27.11.1996 US 757197
(43) Date of publication of application: 15.09.1999
(73) Proprietor: SHELL INTERNATIONALE RESEARCH MAATSCHAPPIJ B.V., 2596 HR Den Haag (NL)
(72) Inventor: KELSEY, Donald, Ross, Fulshear, TX 77441 (US)
(86) International application number: PCT/EP1997/006699
(87) International publication number: WO 1998/023662

(56) References cited:
- EP-A- 0 620 245
- US-A- 2 465 319
- US-A- 3 951 915
- US-A- 4 011 196
- CHEMICAL ABSTRACTS, vol. 86, no. 18, 2 May 1977 Columbus, Ohio, US; abstract no. 122248, XP002063957 & JP 51 142 097 A (TEIJIN LTD.) 7 December 1976
- CHEMICAL ABSTRACTS, vol. 126, no. 9, 3 March 1997 Columbus, Ohio, US; abstract no. 118583, XP002063958 & JP 08 311 177 A (NIPPON ESTER CO. LTD.) 26 November 1996
- DATABASE WPI Week 8951 Derwent Publications Ltd., London, GB; AN 89-375071 XP002063963 & JP 01 282 215 A (TORAY IND. INC.) , 14 November 1989
- CHEMICAL ABSTRACTS, vol. 125, no. 10, 2 September 1996 Columbus, Ohio, US; abstract no. 117278, XP002063959 & JP 08 120 521 A (NIPPON ESTER CO. LTD.) 14 May 1996
- CHEMICAL ABSTRACTS, vol. 85, no. 8, 23 August 1976 Columbus, Ohio, US; abstract no. 47519, XP002063960 & JP 51 024 696 A (MITSUBISHI CHEMICAL IND. CO.) 28 February 1976
- CHEMICAL ABSTRACTS, vol. 86, no. 22, 30 May 1977 Columbus, Ohio, US; abstract no. 156923, XP002063961 & JP 52 009 060 A (TEIJIN LTD.) 24 January 1977
- CHEMICAL ABSTRACTS, vol. 126, no. 11, 17 March 1997 Columbus, Ohio, US; abstract no. 145210, XP002063962 & JP 08 325 391 A (NIPPON ESTER CO. LTD.) 10 December 1996
- DATABASE WPI Week 9507 Derwent Publications Ltd., London, GB; AN 95-048996 XP002063964 & JP 06 329 887 A (POLYPLASTICS KK) , 29 November 1994
- Translation into English of JP-A-51142097

## Description

### Background of the Invention

This invention relates to modified 1,3-propanediol-based polyesters, such as polytrimethylene terephthalate, and the preparation thereof, which polyesters have a reduced tendency to form acrolein when heated in air.

Polytrimethylene terephthalate is a polyester useful in fiber applications in the carpet and textile industries. The manufacture of high molecular weight polytrimethylene terephthalate commonly involves the melt condensation polymerization of 1,3-propanediol and terephthalic acid (or an alkyl ester thereof) to a low molecular weight polymer, followed by solid-state polymerization to produce a high molecular weight polyester. The 1,3-propanediol can be derived from either acrolein or ethylene oxide, but in each case the product 1,3-propanediol typically contains carbonyl-containing by-products in amounts from 50 ppm to more than 1000 ppm.

The inventor has found that, during the polymerization process, certain of such by-product carbonyls can be converted to acrolein, and their presence in the final product can adversely affect the colour of the polymer. Furthermore, when polytrimethylene terephthalate is heated in air at temperatures greater than about 100 °C, such as just prior to solid-state polymerization or when the finished polymer is being dried, acrolein is slowly formed. It would be desirable to produce polytrimethylene terephthalate and other 1,3-propanediol-based polyesters having a reduced tendency to generate acrolein during their preparation and when heated in air.

According to JP51-142097 stabilised polyesters may be made by incorporation of a hindered phenol. The problem remains, however, to reduce the tendency of the polyester to turn yellow.

It is therefore an object of the invention to provide a process for preparing a modified 1,3-propanediol-based polyester. In a specific aspect, it is an object of the invention to provide a process for preparing polytrimethylene terephthalate having a reduced tendency to generate acrolein when heated in air and having a low yellowness index value.

According to the invention, a modified 1,3-propanediol-based polyester composition is prepared in a process comprising:
(a) preparing a polymerization reaction mixture comprising (i) at least one diol in which at least 50 mole percent of the diol is 1,3-propanediol, (ii) an aromatic diacid or alkyl ester thereof, (iii) a hindered phenol of the formula 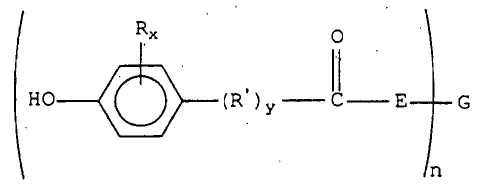 in which each R independently is a C₁₋₁₂ alkyl moiety including methyl, ethyl, isopropyl, t-butyl, t-amyl, 2-phenyl-2-propyl and the like; x is 1 or 2; R' is - (CH₂)- or alkyl-substituted methylene; y is an integer from 1 to about 20; E is oxygen or nitrogen; G is a direct bond, hydrogen or C₁₋₃₀ mono-, di-, tri- or tetravalent linear or branched hydrocarbyl or heterocarbyl, preferably C₁₋₁₀ alkyl such as methyl, ethyl, propyl, hexyl, isodecyl, and the like; and n is an integer corresponding to the valency of G, and (iv) an aromatic organophosphite comprising a trivalent phosphorus group (ArO)_{w}P in which Ar is an aromatic group and w is an integer from 1 to 3; and
(b) maintaining said reaction mixture at a temperature within the range of about 180 to about 300 °C while removing byproduct water, for a time sufficient to produce a polyester composition of intrinsic viscosity as measured in hexafluoroisopropanol of at least about 0.8.

### Detailed Description of the Invention

As used herein, "carbonyls" refers to those compounds, whether containing the C=O chemical group or not, converted according to ASTM E 411-70 to 2,4-nitrophenylhydrazone derivatives and measured calorimetrically. Such carbonyls are derived from both acetals and free carbonyls (e.g., aldehydes and ketones) and are referred to herein in ppm based on C=O.

As used herein, "1,3-propanediol-based polyester" refers to a polyester prepared by reacting at least one diol with at least one (preferably aromatic) diacid or alkyl ester thereof in which at least 50 mole percent of the diol is 1,3-propanediol, and "polytrimethylene terephthalate" ("PTT") refers to such a polyester in which at least 50 mole percent of the aromatic diacid is terephthalic acid (or an alkyl ester thereof). Other diols may include, for example, ethylene glycol, bis(3-hydroxypropyl)ether and 1,4-butanediol. Other diacids may include, for example, isophthalic acid and 2,6-naphthalene dicarboxylic acid. The condensation polymerization of polytrimethylene terephthalate usually generates as much as about 4 mole percent of the bis(3-hydroxypropyl)ether which, in effect, becomes a comonomer and is incorporated into the polyester chain.

The hindered phenols used herein are esters or acids of the formula 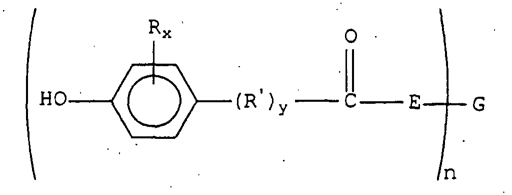 in which each R independently is a C₁₋₁₂ alkyl moiety including methyl, ethyl, isopropyl, t-butyl, t-amyl, 2-phenyl-2-propyl and the like; x is 1 or 2; R' is - (CH2)- or alkyl-substituted methylene; y is an integer from 1 to about 20; E is oxygen or nitrogen; G is a direct bond, hydrogen or C₁₋₃₀ mono-, di-, tri- or tetravalent linear or branched hydrocarbyl or heterocarbyl, preferably C₁₋₁₀ alkyl such as methyl, ethyl, propyl, hexyl, isodecyl, and the like; and n is an integer corresponding to the valency of G. Note that the R and R' groups can be joined, as in the structure 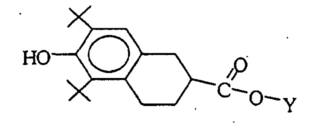 and that the alcohol group (OY) is not limited to low molecular weight monofunctional alcohols but can include higher alcohols such as dodecyi, hexadecyl, octadecyl and the like, and di-, tri- and tetraols such as 1,6-hexanediol, pentaerythritol, and the like.

Examples of G include R, -(CH2)ₘ-, - [(CH2)ₘO]z(CH2)ₘ-, 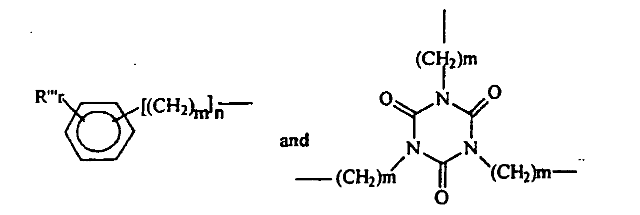 in which R"' is C₁₋₂₀ linear or branched hydrocarbyl; each m is independently an integer from 2 to about 12; r is an integer from 0 to 5; and z is an integer from 1 to about 10. Specific examples of such hindered phenols include octadecyl 3-(3,5-di-t-butyl-4-hydroxyphenyl)-propionate, tetrakis(methylene(3-(3,5-di-t-butyl-4-hydroxyphenyl)propionate))methane, 1,6-hexamethylene-bis(3-(3,5-di-t-butyl-4-hydroxyphenyl)propionate); triethyleneglycol bis(3-(3-t-butyl-4-hydroxy-5-methylphenyl)propionate), and 1,3,5-tris(3,5-di-t-butyl-4-hydroxybenzyl)-1,3,5-triazine-2,4,6(1H,3H,5H)-trione available commercially as Irganox 1076, Irganox 1010, Irganox 259, Irganox 245 and Irganox 3114, respectively ("Irganox" is a trademark). Related hindered phenolic amides and nitrogen-containing esters such as 1,2-bis (3-(3,5-di-t-butyl-4-hydroxyphenyl) propionyl)hydrazine (Irganox 1024) and N,N'-hexamethylene bis-(3-(3,5-di-t-butyl-4-hydroxyphenyl)propionamide) (Irganox 1098) can be used to form the end-capped polyester of the invention, but such compounds are not preferred because they tend to impart higher color to the polymer.

The amount of hindered phenol will generally be such that the molar ratio of the hindered phenol to aromatic diacid monomer (or ester) present in the polymerization reaction mixture is from about 0.0005 mmole per mole of diacid to about 5 mmole/mole, preferably from about 0.005 to about 0.5 mmole/mole

Although certain hindered phenols can increase polytrimethylene terephthalate colour or reduce polymer molecular weight, the hindered phenols of the preferred group (E = oxygen) cause little or no increase in colour. When used in combination with the organophosphites, which tend to decrease polymer colour, the effect of the hindered phenol on colour is often minimal.

The modified 1,3-propanediol-based polyester of the invention, including polyesters and copolyesters, is formed in part of oligomeric or polymeric chains in which the phenol or phenolic residuum of a hindered phenolic acid or ester is bonded to one or both ends of the polymer chain via an ester linkage.

Such a modified polyester can be prepared by incorporating the hindered phenol in a polymerization reaction mixture containing 1,3-propanediol and an aromatic diacid (or alkyl ester thereof) and permitting the polymerization reaction to proceed until a polymer of desired molecular weight is achieved. One class of such polyesters can be represented by the formulas 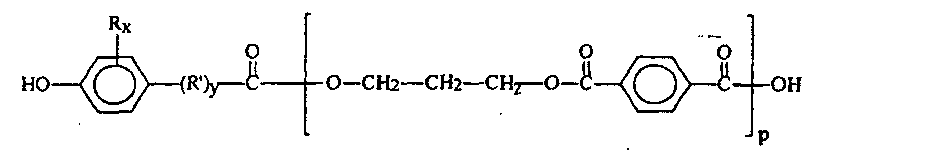 and 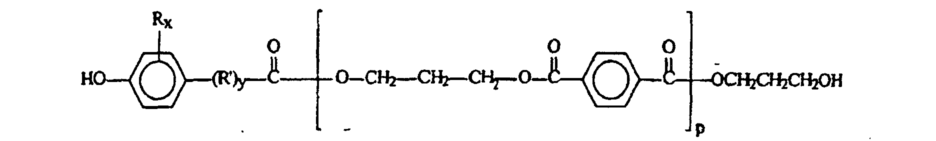 in which p is about 4 to about 2500, preferably about 40 to about 250. One specific embodiment of this class can be represented by the formula 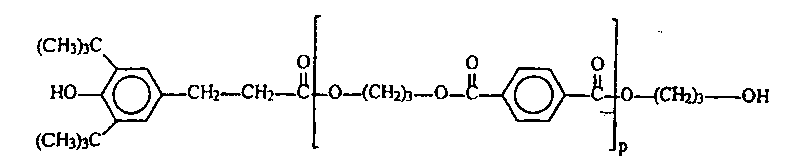 in which the polytrimethylene terephthalate composition includes polyester chains endcapped at one end with a specific hindered phenolic group.

It is not necessary that every polymer chain of the composition include a hindered phenolic group for the 1,3-propanediol-based polyester to exhibit reduced acrolein generation. On average, it is expected that advantageous results are achieved with about 0.000002 to about 2, preferably about 0.00002 to about 1.0, hindered phenolic terminal group per polymer molecule. For fiber-grade polytrimethylene terephthalate, the average number of hindered phenolic endgroups per polymer molecule will be within the range of about 0.001 to about 0.01, or about 1 out of every 100 to 1000 polymer molecules.

Numerous processes are known to prepare polyesters. Such processes may be batch or continuous and employ one or multiple stages. The currently preferred process is a two-stage condensation polymerization process which involves melt polymerization followed by solid-state polymerization.

The first stage, melt polycondensation, includes two steps, a "pressure step" followed by a "vacuum step." In the pressure step, a molar excess of the diol(s) is reacted with the aromatic diacid(s) (or alkyl ester(s) thereof), usually in the absence of added catalyst in the case of diacid reactions, at a temperature within the range of about 230 to about 300 °C, preferably about 240 to about 270 °C, under elevated pressure, preferably under nitrogen gas, within the range of about 20 to about 1379 kPa (200 psi), preferably 345 kPa (50 psi). Water is produced as a byproduct and is removed by suitable means such as overhead distillation. The polymerization conditions are selected so as to produce a relatively low molecular weight polyester having an intrinsic viscosity (i.v.) as measured in hexafluoroisopropanol of less than 0.3, usually within the range of 0.05 to 0.25.

For the vacuum step of the melt polymerization stage, the pressure is reduced and a polycondensation catalyst such as a titanium or tin compound is added. The preferred catalyst is a titanium alkoxide such as titanium butoxide typically present in an amount within the range of 10 to 200 ppm titanium, based on the weight of the polyester.

The low molecular weight product of the first step is heated at a temperature within the range of 240 to 300 °C under less than atmospheric pressure for a time effective to increase the intrinsic viscosity of the starting material to at least 0.5. During the reaction, additional water is produced as a byproduct and is removed overhead along with the excess diol.

In order to impart to the polyester maximum resistance to acrolein generation, the hindered phenol is added to the polymerization reaction mixture in the pressure step of the melt polymerization process. Alternatively, the hindered phenol can be added in the vacuum step or to the polymer melt prior to solid-stating, but addition under high vacuum conditions can result in a lower degree of modification of the polyester, particularly with the lower alkyl hindered phenolic esters.

The hindered phenol is attached to the polymer chain via (trans)esterification. The byproduct water (e.g., from the acid) or alkyl alcohol (e.g., from the ester) can be easily distilled off when the byproduct boils at a temperature less than the boiling point of 1,3-propanediol under the reaction conditions. Residual monofunctional alcohol in the polymerization product mixture can terminate the polymer chain, reducing the ultimate polymer molecular weight. For this reason hindered phenolic acids or the lower alkyl esters (such as methyl, ethyl, propyl, hexyl) are most preferred because of the relatively easy removal of byproduct water or alcohol from the polymerization reaction mixture.

The molten product of the first stage is cooled, solidified and optionally formed into pellets. The polymer is then polycondensed in solid form ("solid-stated") at an elevated temperature less than the target polymer melting point, generally (for polytrimethylene terephthalate) at a temperature greater than 180 °C, preferably above 200 °C, under reduced pressure and/or an inert gas stream. The solid-state polymerization phase is carried out for a time, generally about 4 hours or more, to produce a modified polytrimethylene terephthalate having an i.v. of at least 0.8, generally within the range of 0.95 to 1.15 for fiber applications.

Because the polyester preparation process includes at least one vacuum step, it is preferred that the hindered phenolic acid corresponding to any selected hindered phenolic ester have a boiling point higher than that of 1,3-propanediol, which will help prevent removal of the acid from the reaction mixture under vacuum. The most preferred hindered phenolic esters are thus those in which the corresponding acid has a boiling point greater than that of 1,3-propanediol under the polymerization reaction conditions, preferably within the range of 240 °C to 300 °C, and the (trans)esterification byproduct (water or lower alkyl alcohol) has a boiling point lower than 1,3-propanediol.

A most preferred class of hindered phenolic acid/esters is as defined by the formula above in which at least one R group ortho to the phenolic hydroxyl is t-butyl, t-amyl or 2-phenyl-2-propyl; x is 1 or 2; E is oxygen; y is 1 or 2; R' is -(CH₂)- or alkyl-substituted methylene; n is 1; and G is H or C₁₋₈ alkyl. The use of acids, such as in 3-(3,5-di-t-butyl-4-hydroxyphenyl)-propionic acid, has the advantage of producing water as a byproduct. The alcohol byproduct of an ester reaction introduces an additional chain terminator into the polymerization reaction mixture. A further advantage of an acid is its greater solubility in 1,3-propanediol.

Although modification of polytrimethylene terephthalate with certain hindered phenolic acid/esters can increase polymer colour or reduce polymer molecular weight, the hindered phenolic acid/esters of the preferred groups cause little or no increase in colour when used in combination with an organo-phosphite. The aromatic organophosphite additive contains a trivalent phosphorus group (ArO)_{w}P in which the organophosphite contains at least one C₆₋₂₀ aromatic ring bonded to a phosphorus through an oxygen atom and w is an integer from 1 to 3. The preferred organophosphite additives are selected from aromatic organophosphites of the general formulas I-V: 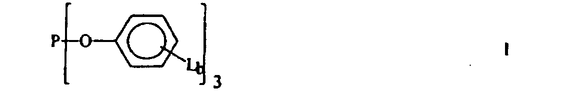 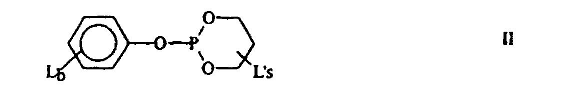 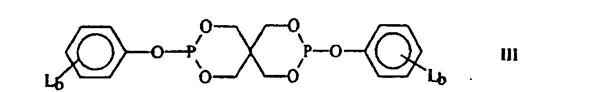 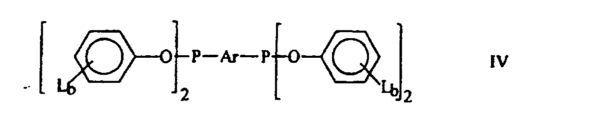 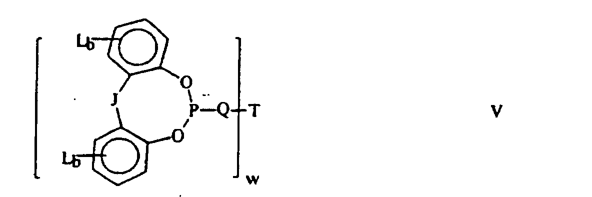 in which each L and L' is selected independently from C₁₋₂₀ hydrocarbyl and heterocarbyl; b is an integer from 1 to 3; s is an integer from 0 to 6; Ar is a C₆₋₂₀ substituted or unsubstituted aromatic group; J is a direct bond or divalent linking group such as -CH₂-, - CHR'-, -S-, -SO-, -SO₂-, -PO(OR')-, -PO₂-, -PR'-, -CO-, and the like where R' is C₁₋₂₀ hydrocarbyl, Q is fluorine or a divalent linking group such as -Ar-, -O-, alkylidene such as -CH₂-, and -CH₂CH₂-, and the like; T is hydrogen or a C₁₋₂₀ hydrocarbyl or heterocarbyl group; and w is an integer from 1 to 3. Examples of preferred organophosphites are tris(2,4-di-t-butylphenyl)phosphite, bis(2,4-di-t-butylphenyl)pentaerythritol diphosphite and 2-[[2,4,8,10-tetrakis(1,1-dimethylethyl)dibenzo-[d,f][1,3,2]-dioxaphosphepin-6-yl]oxy]-N,N-bis [2-[[2,4,8,10-tetrakis(1,1-dimethylethyl)dibenzo-[d,f][1,3,2]dioxaphosphepin-6-yl]oxy]-ethyl]ethanamine, available commercially as Irgafos 168, Ultranox 626 and Iros 12, respectively ("Irgafos" is a trademark).

The organophosphite compound is preferably added in the pressure step of the melt stage of the polymerization process. The phosphorus-containing compound is present in the condensation reaction mixture in an amount within the range of 0.01 to 0.5%wt, preferably 0.05 to 0.3%wt, based on the combined weight of the diol(s) and the diacid(s). Excess phosphite is undesirable because of possible negative effects on catalyst activity. While incorporation of the organophosphite in the polymerization reaction mixture can result in (trans)esterification reaction with the polyester, any such reaction will not interfere with the beneficial results achievable with the invention composition.

The polymer composition prepared according to the invention process is white or near-white in colour. The polymer can be spun into fibers or moulded into parts which also exhibit decreased acrolein generation when heated in air.

### Example 1, Preparation of Modified PTT.

A 600ml stainless steel pressure reactor fitted with a distillation column, condenser and collection vessel was charged with 133.2g (1.75 mole) of 1,3-propanediol having a total carbonyl content of about 70 ppm (as C=O), 207.7g (1.25 mole) terephthalic acid, 0.17g Irgafos 168 (an organophosphite, 0.05 wt%) and 0.04g 3-(3,5-di-t-butyl-4-hydroxyphenyl)propionic acid (0.013 wt%, 0.144 mmole). The reactor was pressurized to 345-552 kPa (50-80 psi) with nitrogen, with pressure released five times to degas followed by repressurization to 138 Kpa (20 psi) and heating to 250 °C. The pressure was maintained at 345 kPa (50 psi) for two hours and then lowered in 69 kPa (10-psi) increments each hour thereafter. After a total of about 6 hours, any remaining pressure was released and the aqueous distillate was weighed. The molten product was poured into a pan and cooled.

The product oligomer (140g) and 0.072g titanium butoxide (80 ppm based on Ti) were charged to a 500-mL 3-neck flask. The flask was degassed with nitrogen, evacuated to about 20 kPa (200 mbar) with a small nitrogen sweep through the reactor, and heated with stirring in an oil bath to 260 °C. The pressure was reduced to less than about 0.2 kPa (2 mbar). After 3 hours, the reaction mixture was cooled and the polymer was isolated.

Intrinsic viscosity (i.v.) of the polymer was measured in hexafluoroisopropanol. The yellowness index (YI) of the polymer was measured on a moulded plaque by reflectance in accordance with ASTM D-1925. Results are shown in Table 1. Acrolein was measured in ppm per weight of polymer.

### Example 2, Comparison Preparation of Unmodified PTT.

The polymerization of Example 1 was repeated, except no organophosphite or hindered phenolic acid was added. Test results are shown in Table 1. The comparison polymer formed substantially more acrolein when heated in air than that of the polymer prepared in Example 1.

A sample of polymer prepared as described in this example was ground at liquid nitrogen temperature, sieved through 20 mesh, and the fine powder was extracted with a 1:1:1 hexane:methanol:chloroform solution. No phenolic ester or acid was detected by reverse phase high pressure liquid chromatography (diode array VV detector at 250 nm).

### Example 3, Preparation of Modified PTT with Hindered Phenolic Ester.

The polymerization of Example 1 was repeated, except that 0.065g of Irganox 1076 (0.122 mmol) was used instead of the hindered phenolic acid. As shown in Table 1, the acrolein formation in air was similar to that of the polymer of Example 1.

A sample of polymer prepared as described in this example was ground at liquid nitrogen temperature, sieved through 20 mesh, and the fine powder was extracted with a 1:1:1 hexane:methanol: chloroform solution. No phenolic ester or acid was detected by reverse phase high pressure liquid chromatography (diode array UV detector at 250 nm).

### Example 4, Preparation of Modified PTT with Hindered Phenolic Ester. (comparative)

The polymerization of Example 3 was repeated, except that the organophosphite was omitted and a relatively large amount (8.5g, 16 mmol) of hindered phenol Irganox 1076 was used. The oligomer and polymer were more coloured than those of Example 3, some solids were collected in the aqueous distillate, and the molecular weight of the final polymer was substantially reduced.

A sample of the polymer was ground at liquid nitrogen temperature, sieved through 20 mesh and the fine powder was extracted with a 1:1:1 solution of hexane:methanol:chloroform. No extractable Irganox 1076 was detected by reverse phase high pressure liquid chromatography (diode array UV detector at 280 nm).

A sample of the oligomer produced in the first step of the polymerization was ground and the fine powder extracted with a 1:1:1 solution of hexane:methanol:- chloroform. No Iraganox 1076 or parent hindered phenolic acid was detectable in the extract by reverse phase high pressure liquid chromatography (UV detector). Analysis by liquid chromatography combined with mass spectroscopy (LC-MS) showed the presence of species with m/z of 336, 484, 542, 690, 748 and 896 which correspond to polytrimethylene terephthalate oligomers endcapped with the hindered phenolic acid. Similar analysis of a control prepared as in Example 2 without hindered phenolic ester did not exhibit any significant oligomeric species at these molecular weights, as expected.

These results show that essentially all the hindered phenolic ester has undergone transesterification and that the hindered phenolic acid portion is bound to the polymer.

The lower molecular weight of the final polymer obtained with a relatively large amount of the ester is also consistent with the transesterification reaction of the ester, because both the hindered phenolic acid and the C₁₈ alcohol derived from the ester are monofunctional species which can terminate the polymer chain and reduce the molecular weight of the polymer.

### Example 5, Preparation of Modified PTT with Hindered Phenolic Acid. (comparative)

The polymerization of Example 1 was repeated, except that the organophosphite was omitted and a relatively larger amount (0.87g, 3.1 mmol) of the hindered phenolic propionic acid was used. The polymer molecular weight was somewhat reduced compared to that prepared in Example 2.

A sample of the polymer was ground at liquid nitrogen temperature and sieved through 20 mesh, and the fine powder was extracted in a Soxhlet extractor with acetonitrile for four hours. After evaporation of the acetonitrile solvent, the residue was taken up in a small amount of solvent and analyzed by reverse phase high pressure liquid chromatography (UV detector). By comparison to a standard solution of the hindered phenolic acid, essentially no detectable hindered phenolic acid was detected in the extract. This is consistent with essentially all of the hindered phenolic acid being bonded via the carboxylic acid group to the polymer.

Similarly, extraction of the polymer formed in the first (pressure) step provided oligomers that were analyzed by LC-MS. The mass spectral data was consistent with species containing the hindered phenolic acid bound to the PTT oligomers, e.g. m/z 336,484,542,690,748,896.

### Example 6, Use of Comparative Phenolic Acid.

A polymerization was conducted as in Example 1, except that the acid was replaced by 0.03g 3,5-di-t-butyl-4-hydroxybenzoic acid (0.12 mmol). Surprisingly, the resistance to acrolein generation of the resulting polymer was not improved, suggesting that a methylene group para to the phenolic hydroxyl is required to achieve the desired effect.

**TABLE 1**

| Example | IV | Yellowness Index | Acrolein in air 6 hr/175 °C | Acrolein in N₂ 13 hr/150°C |
|---|---|---|---|---|
| 1 | 1.16 | 21.1 | 68 | 14 |
| 2 | 1.36 | 29.1 | 408 | 8 |
| 3 | 1.22 | 26.0 | 65 | 8 |
| 4 | 0.55 | 68 | 20 | 15 |
| 5 | 1.06 | 40.2 | 20 | 17 |
| 6 | 1.06 | 17.2 | 432 | 19 |

### Example 7, Confirmation of Modified PTT Identification.

- The distillates collected during the vacuum stage from larger-scale runs (6.8-9.1 Kg/batch [15-20 lbs/batch]) prepared by the process of Example 1 with 0.025 wt% Irganox 1076 and 0.05% Irgafos 168 were analyzed by gas chromatography/mass spectroscopy and found to contain about 0.06 to 0.13% C₁₈ alcohol (C₁₈H₃₇OH), which demonstrates that cleavage of the ester bond of Irganox 1076 occurred and that at least a portion of the alcohol group of Irganox 1076 was distilled from the polymerization mixture along with the 1,3-propanediol. Based on the expected amount of 1,3-propanediol removed at this stage, the amount of the C₁₈ alcohol observed in the distillate was approximately 25% to about 60% of the total alcohol available, in theory, from the Irganox 1076 used. In addition, LC-MS indicated small but detectable amounts of low molecular weight oligomers in this distillate at 336 to 542 consistent with oligomers containing the hindered phenolic acid endcap.

The distillates were also analyzed for the parent hindered phenolic acid [3-(3,5-di-t-butyl-4-hydroxy-phenylpropionic acid] by high pressure liquid chromatography (reverse phase, UV detector) but less than about 10 ppm of the acid (the estimated detection limit based on a standard solution of the acid) was seen. Therefore, essentially all of the hindered phenolic acid portion of Irganox 1076 remained with the polymer and is consistent with the proposed esterification reaction between the acid and the polyester chain.

These distillates also contained about 0.8 to 1.1% 2,4-di-t-butylphenol, which arises from the Irgafos 168 organophosphite.

Distillates from control polymerizations without added Irganox 1076 contained no detectable C₁₈ alcohol and less than 10 ppm (upper limit) of the hindered phenolic acid. Extractions of this control polymer did not contain detectable hindered phenolic acid/ester or encapped oligomers.

### EXAMPLE 8, Comparison of Process Variables.

The polymerization of Example 1 was repeated in larger scale equipment (about 6.8-9.1 Kg (15-20 lb) polymer per batch) using Irgafos 168 (24 and 48 ppm P) and Irganox 1076 (0.025 and 0.05 wt%) in a factorial design series of experiments in which the Irganox 1076 was added in the first (pressure) step or in the second (vacuum) step. The polymers were pelletized and advanced to higher molecular weight (i.v. = 1 or greater) by solid state polymerization by heating at >200 °C. The acrolein generated when the final polymer product was heated in air (6 hours at 175 °C) averaged 56 ppm for the polymers in which the Irganox 1076 was added in the first (pressure) step and 75 ppm for polymers made with the Irganox 1076 added in the second (vacuum) step. Control runs prepared without either Irganox 1076 or Irgafos 168 added to the polymerization produced polymer which generated 190-200 ppm acrolein when heated in air under the same conditions. These results show that addition of the hindered phenolic ester in either step of the polymerization results in reduced generation of acrolein when the polymer is heated in air and that addition in the first (pressure) step is somewhat more effective.

## Claims

1. A process for preparing a 1,3-propanediol-based polyester composition which has increased resistance to acrolein generation when heated in air, the process comprising:
(a) preparing a polymerization reaction mixture comprising (i) at least one diol in which at least 50 mole percent of the diol is 1,3-propanediol, (ii) an aromatic diacid or alkyl ester thereof, (iii) a hindered phenol of the formula 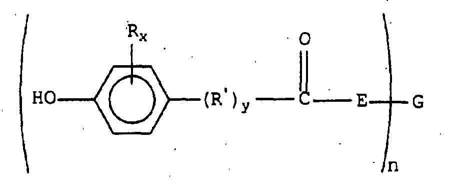 in which each R independently is a C₁₋₁₂ alkyl moiety including methyl, ethyl, isopropyl, t-butyl, t-amyl, 2-phenyl-2-propyl and the like; x is 1 or 2; R' is - (CH₂)- or alkyl-substituted methylene; y is an integer from 1 to about 20; E is oxygen or nitrogen; G is a direct bond, hydrogen or C₁₋₃₀ mono-, di-, tri- or tetravalent linear or branched hydrocarbyl or heterocarbyl, preferably C₁₋₁₀ alkyl such as methyl, ethyl, propyl, hexyl, isodecyl, and the like; and n is an integer corresponding to the valency of G, and (iv) an aromatic organophosphite comprising a trivalent phosphorus group (ArO)_{w}P in which Ar is an aromatic group and w is an integer from 1 to 3; and
(b) maintaining said reaction mixture at a temperature within the range of about 180 to about 300 °C while removing byproduct water, for a time sufficient to produce a polyester composition of intrinsic viscosity as measured in hexafluoroisopropanol of at least about 0.8.

2. The process of claim 1 which comprises the steps of:
(a) maintaining said polymerization reaction mixture at a temperature within the range of about 230 to about 300 °C under greater than atmospheric pressure for a time sufficient to produce an intermediate reaction product mixture comprising a 1,3-propanediol-based polyester having an intrinsic viscosity within the range of about 0.05 to about 0.25;
(b) adding a condensation polymerization catalyst to said intermediate reaction product mixture and maintaining the catalyst-containing intermediate reaction product mixture at a temperature within the range of about 240 to about 300 °C under less than atmospheric pressure for a time sufficient to produce a 1,3-propanediol-based polyester having an intrinsic viscosity of at least about 0.5; and
(c) heating said polyester in the solid state at a temperature greater than about 180 °C for a time sufficient to produce a polyester composition having an intrinsic viscosity of at least about 0.8.

3. The process of claim 1 or 2 in which the hindered phenolic ester is selected from the group consisting of octadecyl 3-(3,5-di-t-butyl-4-hydroxyphenyl)propionate, tetrakis(methylene(3-(3,5-di-t-butyl-4-hydroxyphenyl)-propionate))methane, 1,6-hexamethylene bis(3-(3,5-di-t-butyl-4-hydroxyphenyl)propionate), triethyleneglycol bis(3-(3-t-butyl-4-hydroxy-5-methylphenyl)propionate) and 1,3,5-tris(3,5-di-t-butyl-4-hydroxybenzyl)-1,3,5-triazine-2,4,6(1H,3H,5H)-trione.

4. The process of claim 1 or 2 in which the hindered phenolic acid is 3-(3,5-di-t-butyl-4-hydroxyphenyl)propionic acid.

5. The process of any of claims 1 to 3 in which the hindered phenolic ester is present in the polymerization reaction mixture in an amount within the range of about 0.005 to about 0.5 mmole per mole of the diacid.

## Revendications

1. Procédé de préparation d'une composition de polyester à base de 1,3-propanediol qui a une plus grande résistance à la génération d'acroléine lorsqu'elle est chauffée dans l'air, le procédé comprenant :
(a) la préparation d'un mélange réactionnel de polymérisation comprenant (i) au moins un diol dont au moins 50 pour-cent en mole est du 1,3-propanediol, (ii) un diacide aromatique ou un ester alkylique de celui-ci, (iii) un phénol empêché de formule : 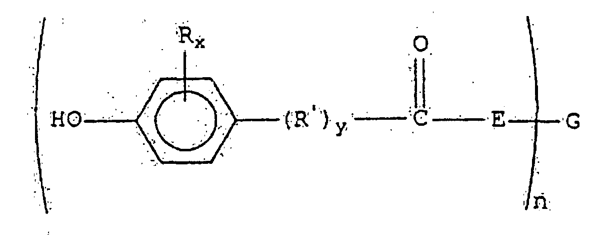 dans laquelle chaque R est indépendamment un radical alkyle en C₁-C₁₂, notamment des groupes méthyle, éthyle, isopropyle, t-butyle, t-amyle, 2-phényl-2-propyle et analogues; x est 1 ou 2; R' est -(CH₂)- ou un méthylène substitué par un groupe alkyle; y est un entier de 1 à environ 20; E est un atome d'oxygène ou d'azote; G est une liaison directe, de l'hydrogène ou un hydrocarbyle ou un hétérocarbyle linéaire ou ramifié mono-, di-, tri- ou tétravalent en C₁-C₃₀, de préférence un alkyle en C₁-C₁₀ tel que les groupes méthyle, éthyle, propyle, hexyle, isodécyle et analogues; et n est un entier correspondant à la valence de G, et (iv) un organophosphite aromatique comprenant un groupe phosphore trivalent (ArO)_{w}P où Ar est un groupe aromatique et w est un entier de 1 à 3; et
(b) le maintien dudit mélange réactionnel à une température dans la plage d'environ 180 à environ 300°C tout en éliminant l'eau formant un sous-produit, pendant une période de temps suffisante pour produire une composition de polyester d'une viscosité intrinsèque, telle que mesurée dans de l'hexafluoro-isopropanol, d'au moins environ 0,8.

2. Procédé selon la revendication 1, comprenant les étapes suivantes :
(a) le maintien dudit mélange réactionnel de polymérisation à une température dans la plage d'environ 230 à environ 300°C sous une pression supérieure à la pression atmosphérique pendant une période de temps suffisante pour produire un mélange réactionnel intermédiaire comprenant un polyester à base de 1,3-propanediol ayant une viscosité intrinsèque dans la plage d'environ 0,05 à environ 0,25;
(b) l'addition d'un catalyseur de polymérisation par condensation audit mélange réactionnel intermédiaire et le maintien du mélange réactionnel intermédiaire contenant le catalyseur à une température dans la plage d'environ 240 à environ 300°C sous une pression inférieure à la pression atmosphérique pendant une période de temps suffisante pour produire un polyester à base de 1,3-propanediol ayant une viscosité intrinsèque d'au moins environ 0,5; et
(c) le chauffage dudit polyester à l'état solide à une température supérieure à environ 180°C pendant une période de temps suffisante pour produire une composition de polyester ayant une viscosité intrinsèque d'au moins environ 0,8.

3. Procédé selon la revendication 1 ou 2, dans lequel l'ester phénolique empêché est choisi dans le groupe constitué du 3-(3,5-di-t-butyl-4-hydroxyphényl) propionate d'octadécyle, du tétrakis(méthylène(3-(3,5-di-t-butyl-4-hydroxyphényl)propionate))méthane, du bis(3-(3,5-di-t-butyl-4-hydroxyphényl)propionate) de 1,6-hexaméthylène, du bis(3-(3-t-butyl-4-hydroxy-5-méthylphényl)propionate) de triéthylèneglycol et de la 1,3,5-tris(3,5-di-t-butyl-4-hydroxybenzyl)-1,3,5-triazine-2,4,6(1H,3H,5H)-trione.

4. Procédé selon la revendication 1 ou 2, dans lequel l'acide phénolique empêché est l'acide 3-(3,5-di-t-butyl-4-hydroxyphényl)propionique.

5. Procédé selon l'une quelconque des revendications 1 à 3, dans lequel l'ester phénolique empêché est présent dans le mélange réactionnel de polymérisation en quantité dans la plage d'environ 0,005 à environ 0,5 mmole par mole du diacide.

## Patentansprüche

1. Verfahren zur Herstellung einer Polyesterzusammensetzung auf der Basis von 1,3-Propandiol, die bei Erhitzen an Luft eine erhöhte Beständigkeit gegenüber Acroleinbildung aufweist, welches Verfahren umfaßt:
(a) Bereiten eines Polymerisationsreaktionsgemisches, das (i) wenigstens ein Diol, worin wenigstens 50 Mol% des Diols 1,3-Propandiol sind, (ii) eine aromatische Disäure oder einen Alkylester davon, (iii) ein gehindertes Phenol mit der Formel 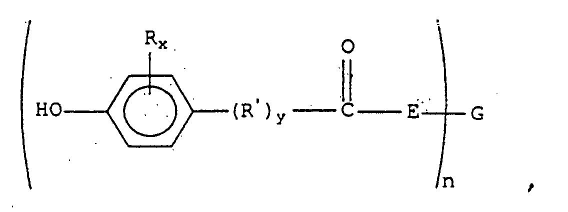 worin jeder Rest R unabhängig voneinander ein C₁₋₁₂ Alkylrest ist, einschließlich Methyl, Ethyl, Isopropyl, t-Butyl, t-Amyl, 2-Phenyl-2-propyl und dergleichen; x den Wert 1 oder 2 aufweist; R' für -(CH₂)- oder alkylsubstituiertes Methylen steht; y eine ganze Zahl von 1 bis etwa 20 darstellt; E für Sauerstoff oder Stickstoff steht; G eine direkte Bindung, Wasserstoff oder einen ein-, zwei-, dreioder vierwertigen geraden oder verzweigten C₁₋₃₀-Hydrocarbyl- oder Heterocarbylrest, vorzugsweise C₁₋₁₀ Alkyl, wie Methyl, Ethyl, Propyl, Hexyl, Isodecyl und dergleichen darstellt; und n eine der Valenz von G entsprechende ganze Zahl bedeutet, und (iv) ein aromatisches Organophosphit umfaßt, das eine dreiwertige Phosphorgruppe (ArO)_{w}P umfaßt, worin Ar eine aromatische Gruppe bedeutet und w eine ganze Zahl von 1 bis 3 darstellt; und
(b) Halten dieses Reaktionsgemisches auf einer Temperatur im Bereich von etwa 180 bis etwa 300 °C, während das Nebenprodukt Wasser entfernt wird, während einer zur Ausbildung einer Polyesterzusammensetzung mit einer Grenzviskosität von wenigstens etwa 0,8, bestimmt in Hexafluorisopropanol, ausreichenden Zeit.

2. Verfahren nach Anspruch 1, das die folgenden Schritte umfaßt:
(a) Halten des Polymerisationsreaktionsgemisches auf einer Temperatur im Bereich von etwa 230 bis etwa 300 °C unter einem überatmosphärischen Druck während einer Zeit, die zur Ausbildung eines intermediären Reaktionsproduktgemisches ausreicht, das einen Polyester auf Basis von 1,3-Propandiol mit einer Grenzviskosität im Bereich von etwa 0,05 bis etwa 0,25 ausreicht;
(b) Zusetzen eines Kondensationspolymerisationskatalysators zu dem intermediären Reaktionsproduktgemiscli und Halten des katalysatorhältigen intermediären Reaktionsproduktgemisches auf einer Temperatur im Bereich von etwa 240 bis etwa 300 °C unter einem unteratmosphärischen Druck während einer Zeit, die zur Ausbildung eines Polyesters auf Basis von 1,3-Propandiol mit einer Grenzviskosität von wenigstens etwa 0,5 ausreicht; und
(c) Erhitzen dieses Polyesters im festen Zustand auf eine über etwa 180 °C liegende Temperatur während einer Zeit, die zur Ausbildung einer Polyesterzusammensetzung mit einer Grenzviskosität von wenigstens etwa 0,8 ausreicht.

3. Verfahren nach Anspruch 1 oder 2, worin der gehinderte Phenolester aus der aus Octadecyl-3-(3,5-di-t-butyl-4-hydroxyphenyl)propionat, Tetrakis(methylen(3-(3,5-di-t-butyl-4-hydroxyphenyl)-propionat))methan, 1,6-Hexamethylenbis(3-(3,5-di-t-butyl-4-hydroxyphenyl)propionat), Triethylenglycol-bis(3-(3-t-butyl-4-hydroxy-5-methylphenyl)propionat) und 1,3,5-Tris(3,5-di-t-butyl-4-hydroxybenzyl)-1,3,5-triazin-2,4,6(1H,3H,5H)-trion) bestehenden Gruppe ausgewählt wird.

4. Verfahren nach Anspruch 1 oder 2, worin die gehinderte Phenolsäure 3-(3,5-Di-t-butyl-4-hydroxyphenyl)propionsäure ist.

5. Verfahren nach einem der Ansprüche 1 bis 3, worin der gehinderte Phenolsäureester in dem Polymerisationsreaktionsgemisch in einer Menge im Bereich von etwa 0,005 bis etwa 0,5 mMol pro Mol Disäure zugegen ist.
